(19) Europäisches Patentamt / European Patent Office / Office européen des brevets

(11) **EP 1 687 759 B1**

(12) **EUROPEAN PATENT SPECIFICATION**

(45) Date of publication and mention
of the grant of the patent:
**14.01.2009 Bulletin 2009/03**

(51) Int Cl.:
**G06K 19/06** (2006.01)    **G06K 7/10** (2006.01)
**G07D 7/12** (2006.01)    **G06K 7/12** (2006.01)

(21) Application number: **04770366.5**

(22) Date of filing: **03.11.2004**

(86) International application number:
**PCT/IB2004/052283**

(87) International publication number:
**WO 2005/048179 (26.05.2005 Gazette 2005/21)**

(54) **INFORMATION CARRIER COMPRISING A NON-CLONABLE OPTICAL IDENTIFIER**

INFORMATIONSTRÄGER MIT EINER NICHT KLONBAREN OPTISCHEN KENNUNG

SUPPORT D'INFORMATIONS COMPORTANT UN IDENTIFICATEUR OPTIQUE QUI NE PEUT PAS ETRE CLONE

(84) Designated Contracting States:
**AT BE BG CH CY CZ DE DK EE ES FI FR GB GR HU IE IS IT LI LU MC NL PL PT RO SE SI SK TR**

(30) Priority: **17.11.2003 EP 03104226**

(43) Date of publication of application:
**09.08.2006 Bulletin 2006/32**

(73) Proprietor: **Koninklijke Philips Electronics N.V.**
**5621 BA Eindhoven (NL)**

(72) Inventors:
• **TUYLS, Pim, T.**
**NL-5656 AA Eindhoven (NL)**
• **SKORIC, Boris**
**NL-5656 AA Eindhoven (NL)**
• **STALLINGA, Sjoerd**
**NL-5656 AA Eindhoven (NL)**
• **OPHEY, Willem, G.**
**NL-5656 AA Eindhoven (NL)**
• **AKKERMANS, Antonius, H., M.**
**NL-5656 AA Eindhoven (NL)**
• **DE JONGH, Petra, E.**
**NL-5656 AA Eindhoven (NL)**

(74) Representative: **Uittenbogaard, Frank**
**Philips**
**Intellectual Property & Standards**
**P.O. Box 220**
**5600 AE Eindhoven (NL)**

(56) References cited:
**WO-A-02/50790**          **US-A- 5 619 025**

**Description**

The invention relates to an information carrier containing a non-clonable optical identifier, to a reading apparatus for reading an information carrier and to a method for identifying an information carrier.

The use of "physically unclonable functions" (PUFs) for security purposes is known, e.g. from the article "Physical One-Way Functions" Ravikanth Pappu et al., Vol. 297 SCIENCE, 20/09/2002. Incorporating a PUF into a product such as a smartcard, chip, or storage medium makes it extremely difficult to produce a "clone" of the product. "Clone" means either a physical copy of the product or a model that is capable of predicting the input-output behavior of the product with reliability. The difficulty of physical copying arises because the PUF manufacturing is an uncontrolled process and the PUF is a highly complex object. Accurate modeling is extremely difficult because of the PUF's complexity; slightly varying the input results in widely diverging outputs. The uniqueness and complexity of PUFs makes them well suited for identification, authentication or key generating purposes.

Optical PUFs can consist of a piece of, e.g., epoxy containing glass spheres, air bubbles or any kind of scattering particles. The epoxy can also be replaced by some other transparent means. Generally, PUFs are called identifier hereinafter. Shining a laser through a PUF produces a speckle pattern which strongly depends on properties of the incoming wave front and on the internal structure of the PUF. The input (wave front) can be varied by shifting or tilting the laser beam or by changing the focus. The wave front can also be changed by placing a spatial light modulator (SLM) in the path of the laser beam. The SLM consists of an array of transparent/dark pixels deciding which part of the laser beam is transmitted or blocked, respectively. Alternatively, an SLM can consist of an array of phase-changing pixels, or of an array of micro-mirrors. If the number of challenges producing different and independent responses is given by a number which is not very large, the attacker might well be able to clone the identifier.

WO 02/50790 A discloses a method of operating a security system which includes making a plurality of security tags, each of which includes a plurality of particles randomly distributed in a light-transmitting matrix, providing a reader which includes means for causing light of one or more wavelengths to impinge on a security tag and means for interpreting the light reflected and/or refracted and/or diffracted by the particles in the matrix, and presenting said tags to said reader.

It is therefore an object of the invention to provide a secure information carrier with an improved non-clonable optical identifier and to provide a reading apparatus for reading an information carrier. It is further an object of the invention to provide a method for identifying an information carrier.

The object is achieved by an information carrier as claimed in claim 1.

The invention is based on the recognition that in order to hamper an attempt to clone an identifier by challenging it with all possible challenges and to store the detected responses, it is possible, in alternative or in addition to enlarging the challenge space, to extend the time required to obtain a single response, so that the time for making a model is too long for a realistic hacking scenario, e. g. , several years. It has been found that the time for obtaining a single measurement could be extended simply by using a light absorbing means for reducing the intensity of the incident light beam, which is preferably a laser beam generated by a laser. This light absorbing means is arranged next to the optical scattering medium, either before the light beam impinges on the scattering medium or after the light beam has passed the scattering medium. The light absorbing means extends the integration time needed for obtaining response signals, making the identifier more secure.

A gray filter reduces the light intensity, preferably before the light beam is incident on the epoxy containing the scattering particles. Epoxies, scattering particles and gray filters are cheap and easy to manufacture.

In case a phase change layer which darkens permanently when the intensity of said light beam (5) is above a threshold intensity is provided the light beam intensity in normal use cannot exceed a threshold intensity because then the phase change layer darkens permanently making the identifier unusable. Thus, the identifier is additionally protected against optical scrutiny with high-intensity light. A phase change material to be used for this purpose may be GeSbTe which, above a certain threshold temperature, may change from the crystalline state into the amorphous state or visa versa.

In case a photo layer which darkens temporarily when the intensity of said light beam (5) is above a threshold intensity is provided the layer darkens temporarily making the scattering medium and the optical identifier unusable for some period of time. Thus, the identifier is additionally protected against optical scrutiny with high- intensity light, but the identifier does not become permanently unusable. A commercially available photochrome material to be used for this purpose is MXP7-114 from PPG industries, which is mostly used for coloring sun glasses. Its full chemical name is 3,3-di(4- methoxyphenyl)-13-hydroxy-13-methyl-indeno[2,1f]naphtho [1,2b]pyran.

In case a photo layer which darkens permanently when exposed to light is provided, there is no threshold value, and the rate of darkening is proportional to the light intensity. After a certain number of ordinary uses, the identifier becomes unusable. In this embodiment, the identifier is protected against optical scrutiny with high-intensity light and also against repeated scrutiny at normal light intensities. A permanently photo sensitive darkening material may be silver chloride.

In further embodiments, the information carrier according to the invention has the features claimed in claims 2 or 3. These embodiment have the advantage that light absorbing means provided in other embodiments, such as a gray filter, cannot be removed by a hacker.

In further embodiments, the information carrier according to the invention has the features claimed in claims 4 or 5.

The object is also achieved by a reading apparatus as claimed in claim 6.

In an embodiment, the reading apparatus according to the invention has the features claimed in claim 7, 8 or 9. If an information carrier with a non-authorized optical identifier is put into the reading apparatus a certain challenge causes a response being detected which differs from the response stored in the storage means. The user is authorized only, if the responses stored in the storage means are identical to the detected responses. A SLM consists of an array of pixels. Pixels can be switched from transparent to dark changing the wave front.

It is also possible to provide a slowly switching light modulator to extend the integration time. The time to switch an array should exceed 1 ms. This slowly switching SLM can also be attached to the identifier in such a way that removal of the SLM damages the identifier, making it unusable. However, the light modulator can also be part of the reading apparatus.

The slowness is preferably provided by use of a particular material which has appropriate inherent material properties, such as a slow liquid crystal.

The object is further achieved by a method according to claim 10 and by an identifier, preferably for use in an information carrier, as claimed in claim 11. Preferred embodiments of the products and of the method are defined in the dependent claims.

These and other aspects of the invention will be further described with reference to the drawings, in which:

Fig. 1 shows a principal arrangement containing an information carrier according to the invention,
Fig. 2 shows an arrangement of a reading apparatus according to the invention and
Fig. 3 shows another embodiment of an information carrier according to the invention.

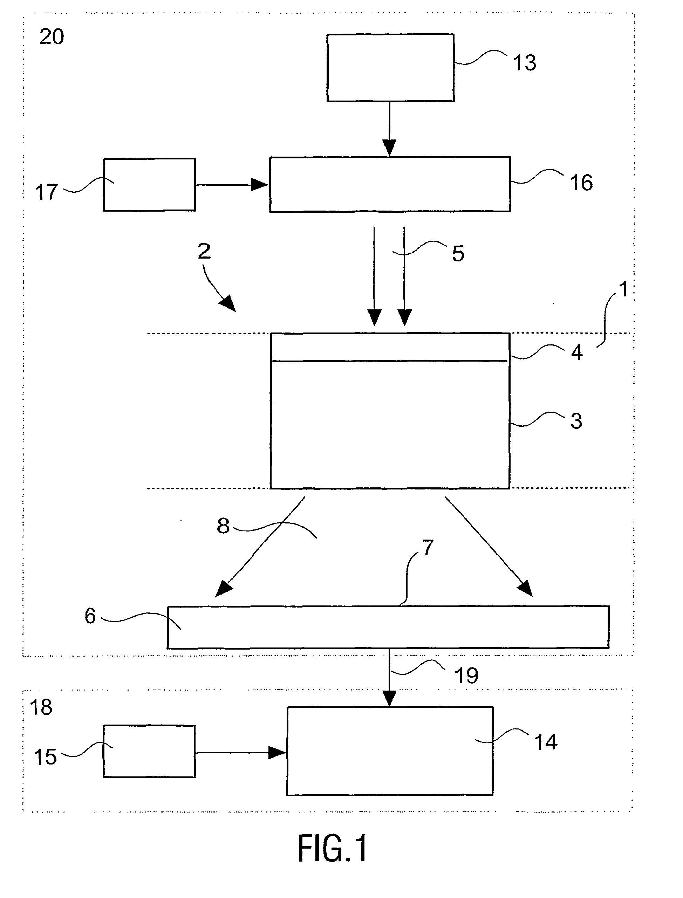

Fig. 1 shows an information carrier according to the invention, e.g. a smartcard 1, indicated by dotted lines. The smartcard includes a non-clonable optical identifier 2 (i.e. the PUF) comprising a piece of epoxy 3 and a gray filter 4. A gray filter 4 is arranged and deposited on one side of the epoxy 3 where a laser beam 5 emitted from a laser 13 incidents.

A reading apparatus for reading the information carrier 1 comprises mainly the laser 13 and a detector 6. The smartcard 1 with the non-clonable optical identifier 2 and the reading apparatus are arranged such that the laser beam 5 shines on the gray filter 4 which thus reduces the intensity of the laser beam 5. The laser beam 5 propagates with reduced intensity through the epoxy 3 and is scattered by scattering particles (not shown) contained in the epoxy 5 resulting in a scattered laser beam 8.

The detector 6 is arranged on the side of the smartcard 1 opposite to the laser 13. The detector 6 detects a speckle pattern 7 caused by the scattered laser beam 8. By integrating over a certain period of time a response signal is thus obtained at the detector 6. The integration time due to the filter 4 on the identifier is preferably longer than 1 ms.

Before a laser beam 5 is incident on the gray filter 4 it passes a spatial light modulator (SLM) 16. The light modulator 16 contains an array of dark and bright pixels, which can be switched by a control unit 17. The laser beam 5 passing a set array is called a challenge, which incidents on the gray filter 4. The speckle pattern 7 assigned to this challenge is a response. For each array there exists a certain assigned response.

The typical protocol for issuing and checking if the smartcard 1 is authenticated is as follows (using an example of a bank 18 checking a user's smartcard 1). First, there is an "enrolment" phase. The bank 18 takes a freshly produced smartcard 1 with PUF, measures a number of challenge and response (CR) pairs and stores them in a memory 15, e.g. on a hard disk. Usually, not all possible CR pairs are stored since this would take too long. Then the smartcard I with PUF is given to the account holder ("user").

The second phase is the authentication phase. The user presents his smartcard 1 to a reader 20. The reader 20 contacts the bank. The bank 18 selects one challenge from its limited database 15. If the user really possesses the PUF he is able to give the correct response which is checked, e.g. by a comparator in the bank 18. A secure channel 19 is formed between the reader 20 and the bank 18, based on their shared secret knowledge of the PUF's response. There are several ways of agreeing on an encryption key for the secure communication over the insecure line between user and bank. A CR pair should be used for authentication only once. The secure channel 19 can be used to refresh the bank's database of CR pairs: the bank 18 sends a number of random challenges and the PUF sends back the responses. These CR pairs can later be used for authentication.

It should be noted that the memory 15 and the comparator 14 can also be part of the reading apparatus 20.

To clone the optical identifier 2 it is necessary for the hacker to challenge the epoxy 3 with all possible challenges of bright and dark pixel combinations, and to store the responses. These challenge-response pairs characterize the epoxy 3 completely.

If the SLM contains M switchable pixels, the hacker has to do M (M+1)/2 measurements to figure out the speckle pattern I(x,y) for all challenges. This can be understood as follows. If the light front (including phase information) due to a single transparent pixel i hitting the detector 6 is denoted as $f_i(x,y)$ and the light front due to two transparent pixels i and j as $f_{ij}(x,y)$, then the measured speckle pattern intensities $I_i(x,y)$ and $I_{ij}(x,y)$ are given by

$$I_i = |f_i|^2$$

$$I_{ij} = |f_i + f_i|^2 = I_i + I_j + (f_i^* f_j + f_j^* f_i) \equiv I_i + I_j + C_{ij},$$

where the cross terms have been denoted by $C_{ij}$. The hacker measures all speckle patterns $I_i$ and $I_{ij}$. These are M(M+1)/2 in number. An arbitrary challenge is represented as a list specifying which pixels are transparent ($a_i = 1$) and which are blocking ($a_i = 0$).

The resulting speckle pattern I(x,y) is given by

$$I = |\sum_{i=1}^{M} a_i f_i|^2 = \sum_{i=1}^{M} a_i |f_i|^2 + \sum_{i \neq j} a_i a_j (f_i^* f_j + f_j^* f_i)$$

$$= \sum_{i=1}^{M} a_i I_i + \sum_{i \neq j} a_i a_j C_{ij} \quad .$$

Since all $I_i$ and $C_{ij}$ are known to the hacker, the speckle pattern can be rebuilt from the $I_i$ and $C_{ij}$ and the challenge $\{a_i\}$. Thus, a successful attack can be mounted in a polynomial amount of time, approximately $M^2/2$ measurements which is considered insecure.

Though only $M^2$ measurements are necessary for cloning the identifier it can in practice be sufficiently large to thwart attacks. This follows from the fact that the measurement on an identifier 2 takes a finite amount of time. If for instance, the time needed to measure one challenge is $10^{-4}$s, and M=$10^6$, an exhaustive attack takes $10^8$s which is approximately three years. Therefore an identifier 2 has to be made slow. The slowness of the measurement process should result from the physical properties of the identifier 2. A detector 6 measuring an optical speckle pattern 7 needs a minimum amount of time to integrate the incoming scattered light 8. This time is usually called integration time and depends on the intensity of the light. The integration time also depends on the amount of noise in the detector 6. A lower bound on the noise level is given by the so-called shot noise. This gives a fundamental physical lower bound on the integration time. Hence, it can never be reduced by better technologies.

Assuming that the laser emits light of total power P, this power is attenuated by the identifier 2 and the gray filter 4 with a factor $\eta_{PUF}P$. The laser beam 5 consists of photons with energy $hc/\lambda$, where $\lambda$ is the wavelength of the light in vacuum, h is Planck's constant, and c is the speed of light in vacuum. The average number of photons per second incident on the detector 6 is then $\eta_{PUF}P\lambda/hc$. The detector 6 consists of M pixels giving the average number of photons per second incident on a pixel as $\eta_{PUF}P\lambda/hcM$. In the detector 6 the photons are converted to electrons with quantum efficiency $\eta_Q$ giving an average number of $\eta_Q\eta_{PUF}P\lambda/hcM$ electrons per second per pixel. The electrons are collected during a certain time interval, the integration time T. The actual signal $N_e$ is the total collected number of electrons during the integration time T, and is read out with the frame frequency 1/T. The generation of photo-electrons at the detector 6 is a Poissonian process, so $N_e$ is a statistical variable. The average and variance of $N_e$ are equal and given by:

$$\langle N_e^2 \rangle - \langle N_e \rangle^2 = \langle N_e \rangle = \frac{\eta_Q \eta_{PUF} P \lambda}{hcM} T.$$

The ratio of signal power and noise power then follows as:

$$SNR = \frac{\langle N_e \rangle^2}{\langle N_e^2 \rangle - \langle N_e \rangle^2} = \frac{\eta_Q \eta_{PUF} P \lambda}{hcM} T.$$

In practice this is the upper limit for the signal-to-noise ratio, as other noise sources are not taken into account. It follows that the integration time must be at least:

$$T \geq \frac{hcM \cdot SNR}{\eta_Q \eta_{PUF} P\lambda}.$$

The number R of useful bits (encoding the gray levels) that is extracted from the measured signal per pixel is limited according to Shannon's theorem:

$$R \leq C = \frac{1}{2} \log_2[1 + SNR].$$

As there are M pixels, the response contains $K = RM = \xi CM$ useful bits, where $\xi$ is the efficiency of the code that extracts the useful bits from the channel bits. It now follows that the integration time is bounded to:

$$T \geq \frac{hcM(2^{2K/M\xi} - 1)}{\eta_Q \eta_{PUF} P\lambda} = \frac{hcM(2^{2C} - 1)}{\eta_Q \eta_{PUF} P\lambda}.$$

All the variables on the right hand side are at the user's disposal to make this lower bound for the integration time sufficiently high to make the attack futile. To increase the integration time the number of pixels M can be increased, the number of gray levels per pixel ($2^C$) can be increased, the quantum efficiency of the detector ($\eta_Q$) can be decreased by designing a silicon under the detector 6 appropriately, transparency of epoxy 3 and/or the gray filter 4 ($\eta_{PUF}$) can be decreased or the power of the laser beam 5 can be decreased. Furthermore, the wavelength of the laser beam 5 can be decreased, i.e. it is advantageous to use a blue laser instead of a red laser.

Estimating the integration time for a realistic situation, the following values for the parameters can be used: $h = 6.6 * 10^{-34}$Js, $c = 3 * 10^8$m/s, $M = 10^6$, $C = 4$, $\eta_Q = 3 * 10^{-1}$, $\eta_{PUF} = 10^{-2}$, $P = 10^{-3}$W and $\lambda = 5 * 10^{-7}$m. Then, the integration time becomes $T = 10^{-4}$s. The total time $T_{tot} = T * M^2$ for cloning the identifier 2 is then approximately 3 years.

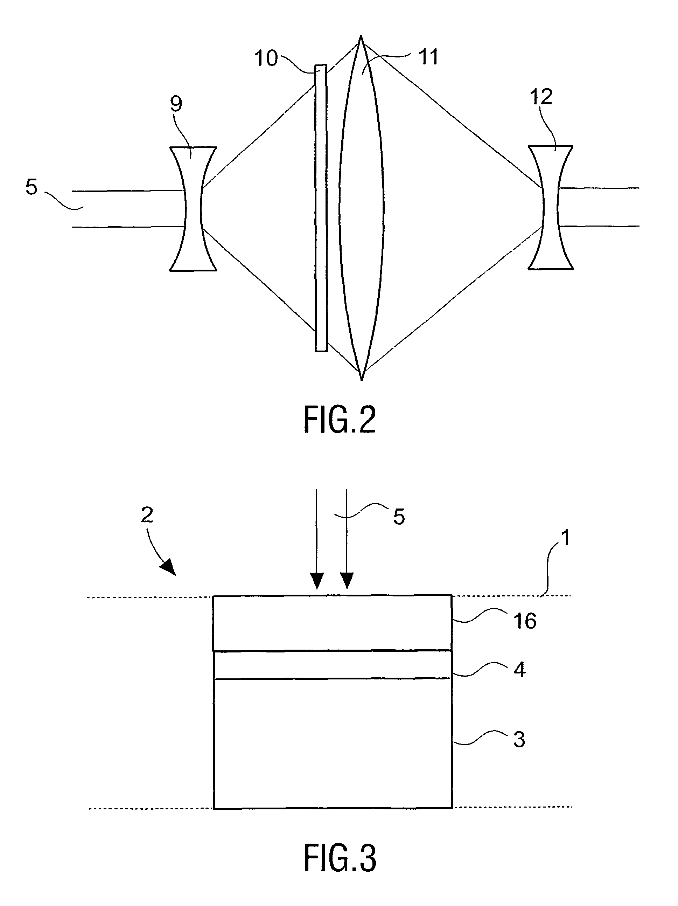

Fig. 2 shows parts of another embodiment of a reading apparatus according to the invention. Therein, the laser beam 5 is widened by a first concave lens 9. The widened beam passes an SLM 10. In the path of the laser beam a convex lens 11 is arranged next to the SLM 10 for narrowing the laser beam. A second concave lens 12 straightens the laser beam. This arrangement allows a large number of pixels for a laser beam with a small radius because the SLM 10 is arranged in a section of the laser beam, where the laser beam is widened already.

Generally, the PUF 2 is preferably made of epoxy containing micron-scale scattering particles such as glass spheres or rods, metals, metal-oxides, phase-change materials such as GaSb alloy and photo-chemical materials such as $AgBr_2$. These are very cheap, and the production process is uncontrolled. The detector 6 is preferably a CCD or CMOS-type.

Instead of providing the SLM control unit 17 and the light modulator 16 (10) in the reading apparatus, they can also be placed on the information carrier itself. The SLM may then take the role of a shutter which keeps the PUF in the dark as long as it is not used. An embodiment of such an information carrier is shown in Fig. 3.

The described invention improves identifiers for, e.g., smartcards. Known identifiers make use of large challenge spaces making it, practically, impossible to collect all challenge-response pairs for cloning the identifier. The present invention provides secure identifiers by providing a light absorbing means to extend the integration time to obtain a reliable signal. Further, an identifier can be provided which is, in principle, insecure because of a small challenge space, but is made secure by use of the invention. This leads to a smaller and cheaper identifier, which is suitable for miniaturization.

**Claims**

1. Information carrier containing a non-clonable optical identifier (2) comprising:

   - an optical scattering medium (3) for being challenged by a light beam (5) and for scattering said light beam (5), and

- a light absorbing means (3,4) for reducing the intensity of said light beam (5) so that an integration time for obtaining a response signal by integrating the light beam scattered (8) is extended,

wherein said light absorbing means (3, 4) comprises

- a gray filter (4) attached to said optical scattering medium (3) , and/or
- a phase change layer, which darkens permanently when the intensity of said light beam (5) is above a threshold intensity, and/or
- a photo layer, which darkens temporarily when the intensity of said light beam (5) is above a threshold intensity, and/or
- a photo layer which darkens permanently when exposed to light.

2. Information carrier as claimed in claim 1, **characterized in that** said scattering medium (3) and said light absorbing means are integral.

3. Information carrier as claimed in claim 2, **characterized in that** said light absorbing means are implemented by using a scattering material having a low light transmittance or reflectance, containing scattering particles of phase-change material or photo-effect material.

4. Information carrier as claimed in claim 1, **characterized in that** said non-clonable optical identifier further comprises a light modulator (16) on the side of the information carrier for facing said light beam (5).

5. Information carrier as claimed in claim 4, **characterized in that** said light modulator (16) has a switching time larger than 1 ms.

6. Reading apparatus for reading an information carrier (1) containing a non-clonable optical identifier (2) comprising an optical scattering medium (3) for being challenged by a light beam (5) and for scattering said light beam (5), said reading apparatus comprising:

- a light source (13) for emitting a light beam (5) for challenging the optical identifier (2) of said information carrier (1),
- a detector (6) for detecting scattered light (8) scattered by the scattering medium (3) of said information carrier (1) and for integrating said scattered light(8) over a period of time for obtaining a response signal to be used for comparing to a stored response signal associated with a corresponding challenge signal, and
- a light modulator (16) arranged between the light source (13) and the identifier (2) when the information carrier is present inside the reading apparatus.

7. Reading apparatus as claimed in claim 6, further comprising:

- a storage means (14) for storing challenge signals and associated response signals for said identifier (2), and
- a comparison means (15) for comparing the obtained response signal with the stored response signal associated with a corresponding challenge signal.

8. Reading apparatus as claimed in claim 6, **characterized in that** said light modulator (16) contains an array of dark and bright pixels, wherein the array can be switched.

9. Reading apparatus as claimed in claim 6, further comprising a lens system (9, 11, 12) for widening the light beam (5), wherein the light modulator (16) is arranged in a widened section of the light beam (5).

10. Method for identifying an information carrier containing a non-clonable optical identifier (2) comprising an optical scattering medium (3) for being challenged by a light beam (5) and for scattering said light beam (5), and a light absorbing means (3, 4) for reducing the intensity of said light beam (5) so that an integration time for obtaining a response signal by integrating the light beam scattered (8) is extended, said method comprising the steps of:

- challenging the optical identifier (2) of said information carrier (1) by a light beam (5), - reducing said intensity of said light beam (5) by means of:
- a gray filter (4) attached to said optical scattering medium (3), and/or
- a permanent darkening a of phase change layer comprised in said light absorbing means (3, 4) when the intensity of said light beam (5) is above a threshold intensity, and/or
- a temporal darkening of a photo layer comprised in said light absorbing means (3, 4) when the intensity of said light beam (5) is above a threshold intensity, and/or
- a permanent darkening of a photo layer comprised in said light absorbing means (3, 4) due to an exposing to light
- detecting scattered light (8) scattered by the scattering medium (3) of said information carrier (1),
- integrating said scattered light (8) over a period of time for obtaining a response signal, and
- comparing the obtained response signal with a stored response signal associated with a corresponding challenge signal.

**11.** Non-clonable optical identifier(2), in particular for use in an information carrier as claimed in claim 1, comprising:

- an optical scattering medium (3) for being challenged by a light beam (5) and for scattering said light beam (5), and
- a light absorbing means (3, 4) for reducing the intensity of said light beam (5) so that an integration time for obtaining a response signal by integrating the light beam scattered (8) is extended,

wherein said light absorbing means (3, 4) comprises

- a gray filter (4) attached to said optical scattering medium (3), and/or
- a phase change layer which darkens permanently when the intensity of said light beam (5) is above a threshold intensity, and/or
- a photo layer which darkens temporarily when the intensity of said light beam (5) is above a threshold intensity, and/or
- a photo layer which darkens permanently when exposed to light.

**Patentansprüche**

**1.** Informationsträger, enthaltend eine nicht klonbare optische Kennung (2) mit:

- einem optischen streuenden Medium (3), um von einem Lichtbündel (5) abgefragt zu werden und um das genannte Lichtbündels (5) zu streuen, und
- einem Licht absorbierenden Mittel (3, 4) zum Verringern der Intensität des genannten Lichtbündels (5), so dass eine Integrationszeit zum Erhalten eines Antwortsignals durch Integrieren des gestreuten Lichtbündel (8) verlängert wird,

wobei das genannte Licht absorbierende Mittel Folgendes umfasst

- ein an dem genannten optischen streuenden Medium (3) befestigtes Graufilter (4) und/oder
- eine phasenändernde Schicht, die dauerhaft dunkel wird, wenn die Intensität des genannten Lichtbündels (5) oberhalb einer Schwellenintensität liegt, und/oder
- eine Photoschicht, die vorübergehend dunkel wird, wenn die Intensität des genannten Lichtbündels (5) oberhalb einer Schwellenintensität liegt, und/oder
- eine Photoschicht, die dauerhaft dunkel wird, wenn sie Licht ausgesetzt wird.

**2.** Informationsträger nach Anspruch 1, **dadurch gekennzeichnet, dass** das streuende Medium (3) und das Licht absorbierende Mittel aus einem Stück sind.

**3.** Informationsträger nach Anspruch 6, **dadurch gekennzeichnet, dass** die Licht absorbierenden Mittel unter Verwendung eines streuenden Materials mit geringem Lichtdurchlassgrad oder Reflexionsvermögen ausgeführt sind, das streuende Teilchen aus phasenänderndem Material oder Photoeffektmaterial umfasst.

**4.** Informationsträger nach Anspruch 1, **dadurch gekennzeichnet, dass** die nicht klonbare optische Kennung weiterhin auf der Seite des Informationsträgers einen Lichtmodulator (16) umfasst, um dem Lichtbündel (5) zugewandt zu sein.

**5.** Informationsträger nach Anspruch 4, **dadurch gekennzeichnet, dass** der Lichtmodulator (16) eine Schaltzeit hat, die größer ist als 1 ms.

6. Lesegerät zum Lesen eines Informationsträgers (1), enthaltend eine nicht klonbare optische Kennung (2) mit einem optischen streuenden Medium (3), um von einem Lichtbündel (5) abgefragt zu werden und um das genannte Lichtbündel (5) zu streuen,
wobei das Lesegerät Folgendes umfasst:

- eine Lichtquelle (13) zum Aussenden eines Lichtbündels (5) zum Abfragen der optischen Kennung (2) des Informationsträgers (1),
- einen Detektor (6) zum Detektieren von Streulicht (8), das an dem streuenden Medium (3) des Informationsträgers (1) gestreut worden ist, und zum Integrieren des genannten Streulichtes (8) über eine Zeitdauer, um ein Antwortsignal zu erhalten, das zum Vergleichen mit einem gespeicherten Antwortsignal zu verwenden ist, welches zu einem entsprechenden Authentisierungsabfragesignal gehört, und
- einen zwischen der Lichtquelle (13) und der Kennung (2) angeordneten Lichtmodulator (16), wenn sich der Informationsträger innerhalb des Lesegerätes befindet.

7. Lesegerät nach Anspruch 6, weiterhin mit:

- einem Speichermittel (14) zum Speichern von Authentisierungsabfragesignalen und zugehörigen Antwortsignalen für die genannte Kennung (2) und
- einem Vergleichsmittel (15) zum Vergleichen des erhaltenen Antwortsignals mit dem gespeicherten Antwortsignal, das zu einem entsprechenden Authentisierungsabfragesignal gehört.

8. Lesegerät nach Anspruch 6, **<u>dadurch gekennzeichnet, dass</u>** der Lichtmodulator (16) ein Array aus dunklen und hellen Pixeln enthält, wobei das Array geschaltet werden kann.

9. Lesegerät nach Anspruch 6, weiterhin mit einem Linsensystem (9, 11, 12) zum Aufweiten des Lichtbündels (5), wobei der Lichtmodulator (16) in einem erweiterten Abschnitt des Lichtbündels (5) angeordnet ist.

10. Verfahren zum Identifizieren eines Informationsträgers, enthaltend eine nicht klonbare optische Kennung (2) mit einem optischen streuenden Medium (3), um von einem Lichtbündel (5) abgefragt zu werden und um das genannte Lichtbündel (5) zu streuen, und einem Licht absorbierenden Mittel (3, 4) zum Verringern der Intensität des genannten Lichtbündels (5), so dass eine Integrationszeit zum Erhalten eines Antwortsignals durch Integrieren des gestreuten Lichtbündels (8) verlängert wird, wobei das Verfahren die folgenden Schritte umfasst:

- Abfragen der optischen Kennung (2) des genannten Informationsträgers (1) mittels eines Lichtbündels (5),
- Verringern der Intensität des Lichtbündels (5) durch:

- ein an dem genannten optischen streuenden Medium (3) befestigtes Graufilter (4) und/oder

- permanentes Dunkelwerden einer in dem Licht absorbierenden Mittel (3, 4) enthaltenen phasenändernden Schicht, wenn die Intensität des genannten Lichtbündels (5) oberhalb einer Schwellenintensität liegt, und/oder
- vorübergehendes Dunkelwerden einer in dem Licht absorbierenden Mittel (3, 4) enthaltenen Photoschicht, wenn die Intensität des genannten Lichtbündels (5) oberhalb einer Schwellenintensität liegt, und/oder
- permanentes Dunkelwerden einer in dem Licht absorbierenden Mittel (3, 4) enthaltenen Photoschicht infolge eines Aussetzens an Licht,
- Detektieren von Streulicht (8), das an dem streuenden Medium (3) des Informationsträgers (1) gestreut worden ist,
- Integrieren des genannten Streulichtes (8) über eine Zeitdauer, um ein Antwortsignal zu erhalten, und
- Vergleichen des erhaltenen Antwortsignals mit einem gespeicherten Antwortsignal, das zu einem entsprechenden Authentisierungsabfragesignal gehört.

11. Nicht klonbare optische Kennung (2), insbesondere zur Verwendung in einem Informationsträger nach Anspruch 1, mit:

- einem optischen streuenden Medium (3), um von einem Lichtbündel (5) abgefragt zu werden und um das genannte Lichtbündels (5) zu streuen, und
- einem Licht absorbierenden Mittel (3, 4) zum Verringern der Intensität des genannten Lichtbündels (5), so dass eine Integrationszeit zum Erhalten eines Antwortsignals durch Integrieren des gestreuten Lichtbündel (8) verlängert wird,

wobei das genannte Licht absorbierende Mittel umfasst

- ein an dem genannten optischen streuenden Medium (3) befestigtes Graufilter (4) und/oder
- eine phasenändernde Schicht, die dauerhaft dunkel wird, wenn die Intensität des genannten Lichtbündels (5) oberhalb einer Schwellenintensität liegt, und/oder
- eine Photoschicht, die vorübergehend dunkel wird, wenn die Intensität des genannten Lichtbündels (5) oberhalb einer Schwellenintensität liegt, und/oder
- eine Photoschicht, die dauerhaft dunkel wird, wenn sie Licht ausgesetzt wird.

**Revendications**

1. Support d'information contenant un identificateur optique non susceptible de clonage (2) comprenant:

   - un milieu optique de dispersion (3) pour être défié par un faisceau lumineux (5) et pour disperser ledit faisceau lumineux (5), et
   - des moyens d'absorption de lumière (3, 4) pour réduire l'intensité dudit faisceau lumineux (5), de sorte qu'il est étendu un temps d'intégration pour obtenir un signal de réponse par l'intégration d'un faisceau lumineux dispersé (8),

   dans lequel lesdits moyens d'absorption de lumière (3, 4) comprennent:

   - un filtre gris (4) qui est attaché audit milieu optique de dispersion (3) et/ou
   - une couche de changement de phase qui se noircit en permanence lorsque l'intensité dudit faisceau lumineux (5) se situe au-dessus d'une intensité de seuil, et/ou
   - une couche photoélectrique qui se noircit temporairement lorsque l'intensité dudit faisceau lumineux (5) se situe au-dessus d'une intensité de seuil, et/ou
   - une couche photoélectrique qui se noircit en permanence lorsqu'elle est exposée à la lumière.

2. Support d'information selon la revendication 1, **caractérisé en ce que** ledit milieu de dispersion (3) fait corps avec lesdits moyens d'absorption de lumière.

3. Support d'information selon la revendication 2, **caractérisé en ce que** lesdits moyens d'absorption de lumière sont mis en oeuvre par l'utilisation d'un matériau de dispersion ayant une faible transmission ou réflexion de lumière contenant des particules de dispersion de matériau de changement de phase ou de matériau d'effet photoélectrique.

4. Support d'information selon la revendication 1, **caractérisé en ce que** ledit identificateur optique non susceptible de clonage comprend encore un modulateur de lumière (16) du côté du support d'information pour faire face audit faisceau lumineux (5).

5. Support d'information selon la revendication 4, **caractérisé en ce que** ledit modulateur de lumière (16) présente un temps de commutation qui est supérieur à 1 ms.

6. Appareil de lecture pour lire un support d'information (1) contenant un identificateur non susceptible de clonage (2) comprenant un milieu optique de dispersion (3) pour être défié par un faisceau lumineux (5) et pour disperser ledit faisceau lumineux (5), ledit appareil de lecture comprenant:

   - une source lumineuse (13) pour émettre un faisceau lumineux (5) pour défier l'identificateur optique (2) dudit support d'information (1),
   - un détecteur (6) pour détecter la lumière dispersée (8) qui est dispersée par le milieu de dispersion (3) dudit support d'information (1) et pour intégrer ladite lumière dispersée (8) sur une période de temps pour obtenir un signal de réponse à utiliser pour être comparé à un signal de réponse stocké qui est associé à un signal correspondant de défi, et
   - un modulateur de lumière (16) qui est disposé entre la source lumineuse (13) et l'identificateur (2) lorsque le support d'information se situe à l'intérieur de l'appareil de lecture.

7. Appareil de lecture selon la revendication 6, comprenant encore:

- des moyens de stockage (14) pour stocker des signaux de défi et des signaux de réponse associés pour ledit identificateur (2), et
- des moyens de comparaison (15) pour comparer le signal de réponse obtenu au signal de réponse stocké qui est associé à un signal correspondant de défi.

8.  Appareil de lecture selon la revendication 6, **caractérisé en ce que** ledit modulateur de lumière (16) contient un réseau de pixels foncés et clairs, dans lequel le réseau peut être commuté.

9.  Appareil de lecture selon la revendication 6, comprenant encore un système d'objectif (9, 11, 12) pour élargir le faisceau lumineux (5) dans lequel le modulateur de lumière (16) est disposé dans une section élargie du faisceau lumineux (5).

10.  Procédé d'identification d'un support d'information contenant un identificateur optique non susceptible de clonage (2) comprenant un milieu optique de dispersion (3) pour être défié par un faisceau lumineux (5) et pour disperser ledit faisceau lumineux (5), et des moyens d'absorption de lumière (3, 4) pour réduire l'intensité dudit faisceau lumineux (5), de sorte qu'il est étendu un temps d'intégration pour obtenir un signal de réponse par l'intégration du faisceau lumineux dispersé (8), ledit procédé comprenant les étapes suivantes consistant à:

- défier l'identificateur optique (2) dudit support d'information (1) par un faisceau lumineux (5),
- réduire ladite intensité dudit faisceau lumineux (5) au moyen de:

- un filtre gris (4) qui est attaché audit milieu optique de dispersion (3), et/ou
- un noircissement permanent d'une couche de changement de phase qui est contenue dans lesdits moyens d'absorption de lumière (3, 4) lorsque l'intensité dudit faisceau lumineux (5) se situe au-dessus d'une intensité de seuil, et/ou
- un noircissement temporel d'une couche photoélectrique qui est contenue dans lesdits moyens d'absorption de lumière (3, 4) lorsque l'intensité dudit faisceau lumineux (5) se situe au-dessous d'une intensité de seuil, et/ou
- un noircissement permanent d'une couche photoélectrique qui est contenue dans lesdits moyens d'absorption de lumière (3, 4) du fait d'une exposition à la lumière,

- détecter la lumière dispersée (8) qui est dispersée par le milieu de dispersion (3) dudit support d'information (1),
- intégrer ladite lumière dispersée (8) sur une période de temps pour obtenir un signal de réponse, et
- comparer le signal de réponse obtenu à un signal de réponse stocké qui est associé à un signal correspondant de défi.

11.  Identificateur optique non susceptible de clonage (2), en particulier pour être utilisé dans un support d'information selon la revendication 1, comprenant:

- un milieu optique de dispersion (3) pour être défié par un faisceau lumineux (5) et pour disperser ledit faisceau lumineux (5), et
- des moyens d'absorption de lumière (3, 4) pour réduire l'intensité dudit faisceau lumineux (5), de sorte qu'il est étendu un temps d'intégration pour obtenir un signal de réponse par l'intégration du faisceau lumineux dispersé (8),

dans lequel lesdits moyens d'absorption de lumière (3, 4) comprennent:

- un filtre gris (4) qui est attaché audit milieu optique de dispersion (3), et/ou
- une couche de changement de phase qui se noircit en permanence lorsque l'intensité dudit faisceau lumineux (5) se situe au-dessus d'une intensité de seuil, et/ou
- une couche photoélectrique qui se noircit temporairement lorsque l'intensité dudit faisceau lumineux (5) se situe au-dessus d'une intensité de seuil, et/ou
- une couche photoélectrique qui se noircit en permanence lorsqu'elle est exposée à la lumière.

FIG.1

FIG.2

FIG.3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0250790 A

**Non-patent literature cited in the description**

- **RAVIKANTH PAPPU et al.** Physical One-Way Functions. *SCIENCE,* 20 September 2002, vol. 297